# EUROPEAN PATENT APPLICATION

(11) **EP 3 552 737 A1**
(43) Date of publication of application: **16.10.2019**
(21) Application number: 19162489.9
(22) Date of filing: 13.03.2019
(51) Int. Cl.: B22F 3/04, B22F 5/08, B22F 3/10, B22F 3/15, B22F 3/24

(54) **METHODS OF MANUFACTURE OF DOUBLE HELICAL GEAR WHEELS BY COLD ISOSTATIC PRESSING**

(30) Priority: 10.04.2018 GB 201805904
(71) Applicant: Rolls-Royce plc, London SW1E 6AT (GB)
(72) Inventor: Clark, Daniel, Derby, Derbyshire DE24 8BJ (GB); Pardoe, Alan, Derby, Derbyshire DE24 8BJ (GB)
(74) Representative: Rolls-Royce plc

(57) **Abstract**

A method of manufacture comprising: controlling provision of a first mould part including an inner surface defining a first cavity, the inner surface of the first mould part comprising a plurality of first grooves; controlling provision of a second mould part including an inner surface defining a second cavity, the inner surface of the second mould part comprising a plurality of second grooves; controlling coupling of the first mould part and the second mould part, the first cavity and the second cavity forming a third cavity, the plurality of first grooves and the plurality of second grooves forming a double helical pattern; controlling provision of a powder to the third cavity; and controlling cold isostatic pressing of the powder within the third cavity to form a double helical gear.

## Description

### TECHNOLOGICAL FIELD

The present disclosure relates to methods of manufacture.

### BACKGROUND

Double helical gears are usually manufactured using a grinding process when high load capability or a superior surface finish is required. The grinding process requires a space to be left in the centre of the gear teeth to allow for grinding wheel run-out. However, the central space does not contribute to load transfer and increases the size and mass of the gear. Additionally, many of the components of the gearbox have an increased size and mass due to this structure of the gear. For example, gear carrying pins, bearings and the gearbox housing may have an increased size and mass to support and accommodate such gears.

### SUMMARY

According to a first aspect there is provided a method of manufacture comprising: controlling provision of a first mould part including an inner surface defining a first cavity, the inner surface of the first mould part comprising a plurality of first grooves; controlling provision of a second mould part including an inner surface defining a second cavity, the inner surface of the second mould part comprising a plurality of second grooves; controlling coupling of the first mould part and the second mould part, the first cavity and the second cavity forming a third cavity, the plurality of first grooves and the plurality of second grooves forming a double helical pattern; controlling provision of a powder to the third cavity; and controlling cold isostatic pressing of the powder within the third cavity to form a double helical gear.

The method may further comprise controlling rotation of the first mould part in a first direction and controlling rotation of the second mould part in the first direction, to remove the first mould part and the second mould part from the double helical gear.

The method may further comprise controlling sintering of the double helical gear.

The method may further comprise controlling hot isostatic pressing of the double helical gear.

The method may further comprise controlling machining of the double helical gear.

The method may further comprise controlling coating of the inner surface of the first mould part and the inner surface of the second mould part with carbon rich material, prior to providing powder to the third cavity.

The method may further comprise controlling evacuation of the third cavity prior to providing powder to the third cavity.

According to a second aspect there is provided a double helical gear manufactured in accordance with the method as described in any of the preceding paragraphs.

According to a third aspect there is provided a gas turbine engine for an aircraft comprising: an engine core comprising a turbine, a compressor, and a core shaft connecting the turbine to the compressor; a fan located upstream of the engine core, the fan comprising a plurality of fan blades; and a gearbox that is arranged to receive an input from the core shaft and to output drive to the fan so as to drive the fan at a lower rotational speed than the core shaft, wherein the gearbox comprises a plurality of double helical gears manufactured in accordance with the method as described in any of the preceding paragraphs.

The turbine may be a first turbine, the compressor may be a first compressor, and the core shaft may be a first core shaft; the engine core may further comprise a second turbine, a second compressor, and a second core shaft connecting the second turbine to the second compressor; and the second turbine, second compressor, and second core shaft may be arranged to rotate at a higher rotational speed than the first core shaft.

According to a fourth aspect there is provided apparatus comprising a controller configured to: control provision of a first mould part including an inner surface defining a first cavity, the inner surface of the first mould part comprising a plurality of first grooves; control provision of a second mould part including an inner surface defining a second cavity, the inner surface of the second mould part comprising a plurality of second grooves; control coupling of the first mould part and the second mould part, the first cavity and the second cavity forming a third cavity, the plurality of first grooves and the plurality of second grooves forming a double helical pattern; control provision of a powder to the third cavity; and control cold isostatic pressing of the powder within the third cavity to form a double helical gear.

The controller may be configured to control rotation of the first mould part in a first direction and control rotation of the second mould part in the first direction, to remove the first mould part and the second mould part from the double helical gear.

The controller may be configured to control sintering of the double helical gear.

The controller may be configured to control hot isostatic pressing of the double helical gear.

The controller may be configured to control machining of the double helical gear.

The controller may be configured to control coating of the inner surface of the first mould part and the inner surface of the second mould part with carbon rich material, prior to providing powder to the third cavity.

The controller may be configured to control evacuation of the third cavity prior to providing powder to the third cavity.

According to a fifth aspect there is provided a computer program that, when read by a computer, causes performance of the method as described in any of the preceding paragraphs.

According to a sixth aspect there is provided a non-transitory computer readable storage medium comprising computer readable instructions that, when read by a computer, cause performance of the method as described in any of the preceding paragraphs.

According to a seventh aspect there is provided a signal comprising computer readable instructions that, when read by a computer, cause performance of the method as described in any of the preceding paragraphs.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forward most) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 degree C (ambient pressure 101.3kPa, temperature 30 degree C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION

Embodiments will now be described by way of example only, with reference to the Figures, in which:
Fig. 1 illustrates a schematic diagram of apparatus for manufacturing double helical gears according to various examples;
Figs. 2A and 2B illustrate a first mould part according to an example;
Figs. 3A and 3B illustrate a second mould part according to an example;
Fig. 4 illustrates a flow diagram of a method of manufacture according to various examples;
Fig. 5 illustrates a side view of a double helical gear according to an example;
Fig. 6 illustrates a side view of another double helical gear according to an example;
Fig. 7 illustrates a sectional side view of a gas turbine engine according to an example;
Fig. 8 illustrates a close up sectional side view of an upstream portion of a gas turbine engine according to an example; and
Fig. 9 is a partially cut-away view of a gearbox for a gas turbine engine according to an example.

### DETAILED DESCRIPTION

In the following description, the terms 'connected' and 'coupled' mean operationally connected and coupled. It should be appreciated that there may be any number of intervening components between the mentioned features, including no intervening components.

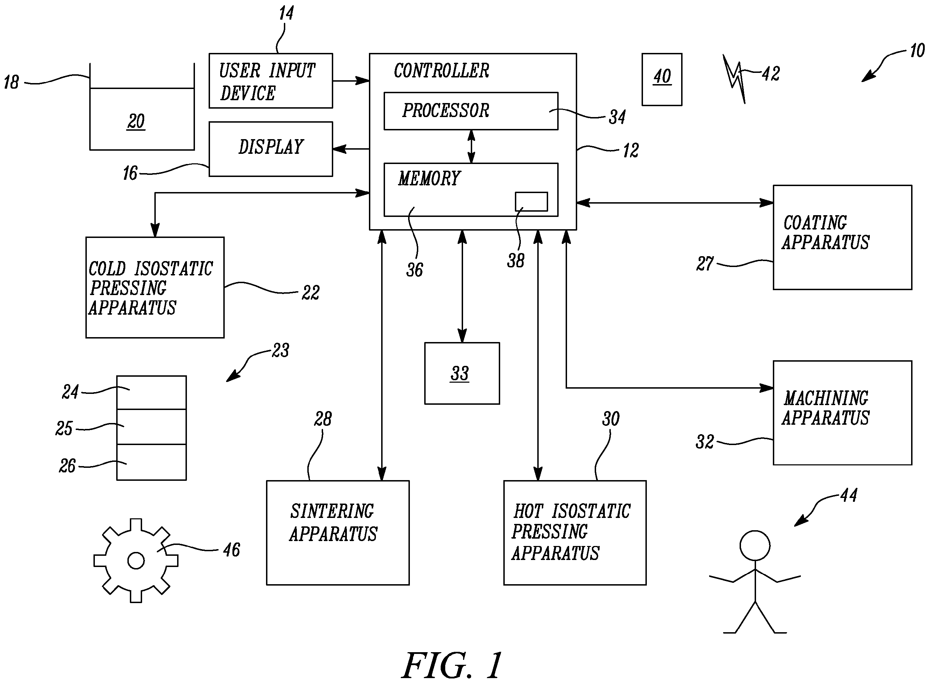

Fig. 1 illustrates a schematic diagram of apparatus 10 for manufacturing double helical gears according to various examples. The apparatus 10 includes a controller 12, a user input device 14, a display 16, a container 18 for storing powder 20, cold isostatic pressing apparatus 22, a mould 23 comprising a first mould part 24 and a second mould part 26, coating apparatus 27, sintering apparatus 28, hot isostatic pressing apparatus 30, machining apparatus 32, and robotic apparatus 33.

In some examples, the apparatus 10 may be a module. As used herein, the wording 'module' refers to a device or apparatus where one or more features are included at a later time and, possibly, by another manufacturer or by an end user. For example, where the apparatus 10 is a module, the apparatus 10 may only include the controller 12, and the remaining features, namely the user input device 14, the display 16, the container 18, the powder 20, the cold isostatic pressing apparatus 22, the mould 23, the coating apparatus 27, the sintering apparatus 28, the hot isostatic pressing apparatus 30, the machining apparatus 32, and the robotic apparatus 33 may be added by one or more other manufacturers. By way of another example, where the apparatus 10 is a module, the apparatus 10 may only include the mould 23 and the cold isostatic pressing apparatus 22, and the remaining features may be added by one or more other manufacturers.

The controller 12, the user input device 14, the display 16, the container 18, the powder 20, the cold isostatic pressing apparatus 22, the mould 23, the coating apparatus 27, the sintering apparatus 28, the hot isostatic pressing apparatus 30, the machining apparatus 32, and the robotic apparatus 33 may be coupled to one another via wireless links and may consequently comprise transceiver circuitry and one or more antennas. Additionally or alternatively, the controller 12, the user input device 14, the display 16, the container 18, the powder 20, the cold isostatic pressing apparatus 22, the mould 23, the coating apparatus 27, the sintering apparatus 28, the hot isostatic pressing apparatus 30, the machining apparatus 32, and the robotic apparatus 33 may be coupled to one another via wired links and may consequently comprise interface circuitry (such as a Universal Serial Bus (USB) socket). It should be appreciated that the controller 12, the user input device 14, the display 16, the container 18, the powder 20, the cold isostatic pressing apparatus 22, the mould 23, the coating apparatus 27, the sintering apparatus 28, the hot isostatic pressing apparatus 30, the machining apparatus 32, and the robotic apparatus 33 may be coupled to one another via any combination of wired and wireless links.

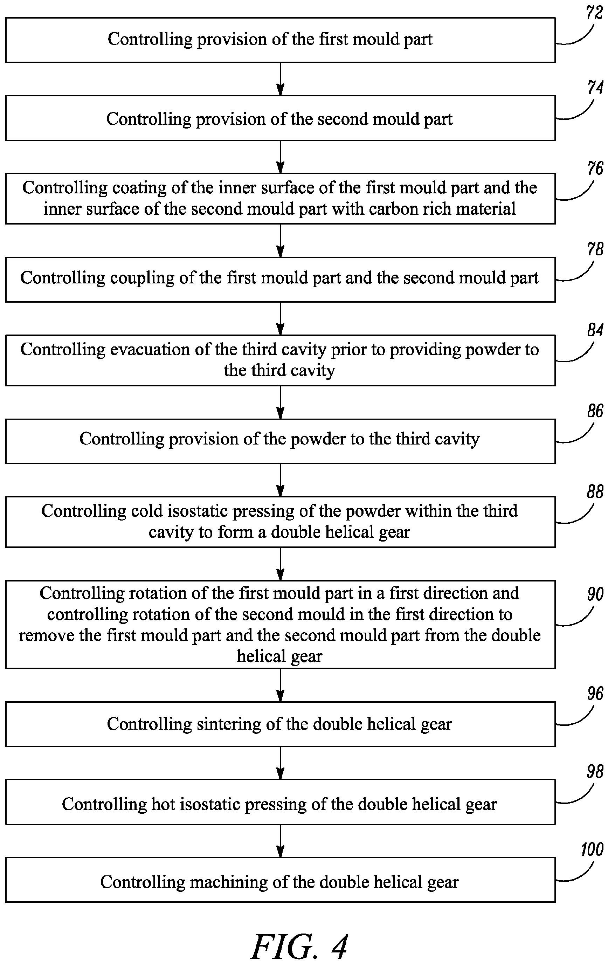

The controller 12 may comprise any suitable circuitry to cause performance of the methods described herein and as illustrated in Fig. 4. The controller 12 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), to perform the methods.

In various examples, the controller 12 may comprise at least one processor 34 and at least one memory 36. The memory 36 stores a computer program 38 comprising computer readable instructions that, when read by the processor 34, causes performance of the methods described herein, and as illustrated in Fig. 4. The computer program 38 may be software or firmware, or may be a combination of software and firmware.

The controller 12 may be located at the same location as the remaining components of the apparatus 10 (that is, the same location as the user input device 14, the display 16, the container 18, the powder 20, the cold isostatic pressing apparatus 22, the mould 23, the coating apparatus 27, the sintering apparatus 28, the hot isostatic pressing apparatus 30, and the machining apparatus 32). For example, the controller 12 may be located in the same factory building as the remaining components of the apparatus 10. Alternatively, the controller 12 may be located remotely from the remaining components of the apparatus 10. For example, the controller 12 may be located in a different building to the remaining components of the apparatus 10. In some examples, the controller 12 may be distributed between the location of the remaining components of the apparatus 10, and a location remote from the remaining components of the apparatus 10.

The processor 34 may include at least one microprocessor and may comprise a single core processor, may comprise multiple processor cores (such as a dual core processor or a quad core processor), or may comprise a plurality of processors (at least one of which may comprise multiple processor cores).

The memory 36 may be any suitable non-transitory computer readable storage medium, data storage device or devices, and may comprise one or more hard disk drives and/or one or more solid state drives. The memory 36 may be permanent non-removable memory, or may be removable memory (such as a universal serial bus (USB) flash drive or a secure digital (SD) card). The memory 36 may include: local memory employed during actual execution of the computer program 38; bulk storage; and cache memories which provide temporary storage of at least some computer readable or computer usable program code to reduce the number of times code may be retrieved from bulk storage during execution of the code.

The computer program 38 may be stored on a non-transitory computer readable storage medium 40. The computer program 38 may be transferred from the non-transitory computer readable storage medium 40 to the memory 36. The non-transitory computer readable storage medium 40 may be, for example, a USB flash drive, a secure digital (SD) card, an optical disc (such as a compact disc (CD), a digital versatile disc (DVD) or a Blu-ray disc). In some examples, the computer program 38 may be transferred to the memory 36 via a signal 42 (which may be a wireless signal or a wired signal).

Input/output devices may be coupled to the controller 12 either directly or through intervening input/output controllers. Various communication adaptors may also be coupled to the controller 12 to enable the apparatus 10 to become coupled to other apparatus or remote printers or storage devices through intervening private or public networks. Non-limiting examples include modems and network adaptors of such communication adaptors.

The user input device 14 may comprise any suitable device for enabling an operator 44 to at least partially control the apparatus 10. For example, the user input device 14 may comprise one or more of: a keyboard, a keypad, a touchpad, a touchscreen display, a computer mouse, and virtual reality (VR) or augmented reality (AR) apparatus. The controller 12 is configured to receive signals from the user input device 14.

The display 16 may be any suitable device for conveying information to the operator 44. For example, the display 16 may be a liquid crystal display (LCD), or a light emitting diode (LED) display, or an organic light emitting diode (OLED) display, or an active matrix organic light emitting diode (AMOLED) display, or a thin film transistor (TFT) liquid crystal display, or a cathode ray tube display. The controller 12 is configured to control the display 16 to convey information to the operator 44.

The container 18 includes one or more receptacles for storing the powder 20. For example, the container 18 may comprise a receptacle storing a stainless steel powder 20. In some examples, the container 18 may comprise a plurality of receptacles for storing two or more different types of powder. For example, the container 18 may include a first receptacle for storing a first type of powder, and a second receptacle for storing a second different type of powder.

The cold isostatic pressing apparatus 22 includes a resilient bag and a pump for pumping liquid (such as water) into the bag. The controller 12 is configured to control the operation of the cold isostatic pressing apparatus 22. For example, the controller 12 may control the pump to pump liquid into the bag to a predetermined pressure (for example, a pressure between two hundred mega Pascal and one thousand mega Pascal) for a predetermined period of time.

The mould 23 is shaped and sized for forming a double helical gear 46. The mould 23 includes the first mould part 24 and the second mould part 26. The first mould part 24 may have any suitable size and shape for forming a first portion of the double helical gear 46, and the second mould part 26 may have any suitable size and shape for forming a second portion of the double helical gear 46. It should be appreciated that in some examples, the mould 23 may include more than two mould parts. Additionally, it should be appreciated that the mould 23 may enable the formation of gears having radially outwardly extending gear teeth (a planet gear of an epicyclic gearbox for example), and gears having radially inwardly extended gear teeth (a ring gear of an epicyclic gearbox for example).

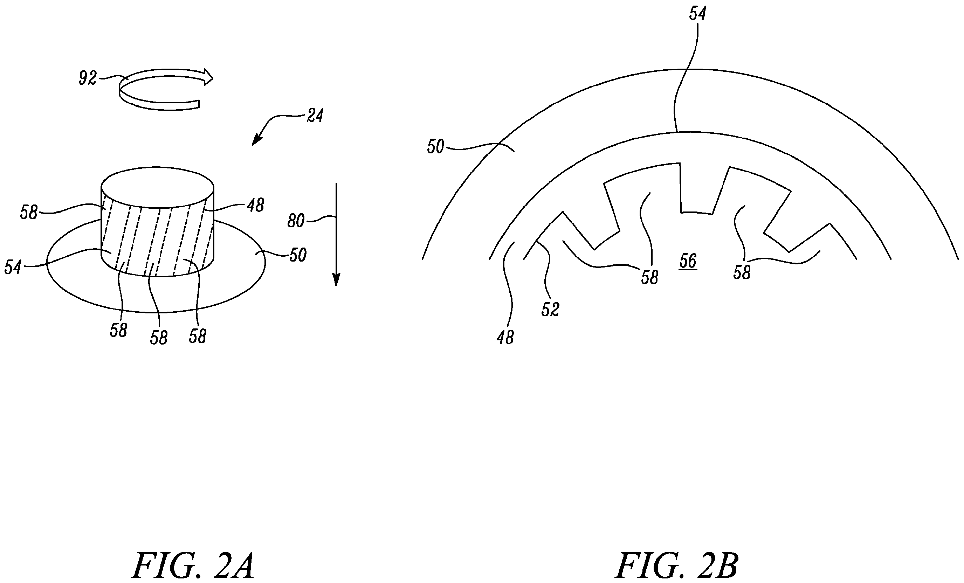

Figs. 2A and 2B illustrate the first mould part 24 according to an example. The first mould part 24 includes a first cylindrical part 48 and a first flange 50 extending around one end of the first cylindrical part 48. The first cylindrical part 48 includes an inner surface 52 and an outer surface 54. The inner surface 52 defines a first cavity 56 and comprises a plurality of first grooves 58 that extend helically along the whole length of the first mould part 24.

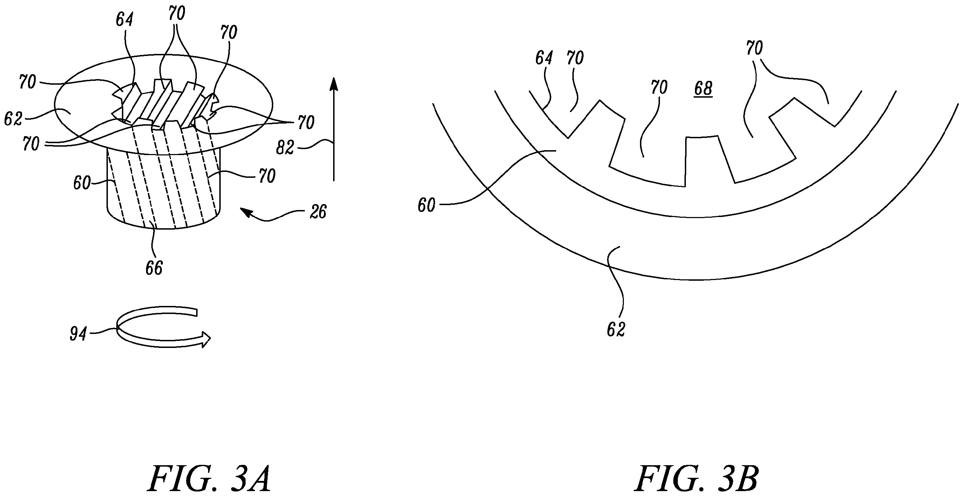

Figs. 3A and 3B illustrates the second mould part 26 according to an example. The second mould part 26 includes a second cylindrical part 60 and a second flange 62 extending around one end of the second cylindrical part 60. The second cylindrical part 60 includes an inner surface 64 and an outer surface 66. The inner surface 64 defines a second cavity 68 and comprises a plurality of second grooves 70 that extend helically along the whole length of the second mould part 26.

It should be appreciated that in other examples, the plurality of first grooves 58 and/or the plurality of second grooves 70 may not extend along the whole length of the first mould part 24 and the second mould part 26 respectively. For example, the first grooves 58 and/or the second grooves 70 may not extend to the entrances of the first cavity 56 and the second cavity 68 respectively.

Returning to Fig. 1, the coating apparatus 27 may comprise any suitable apparatus for coating the inner surface 52 of the first mould part 24 and the inner surface 64 of the second mould part 26 with a carbon rich material. For example, the coating apparatus 27 may comprise a chemical vapour deposition apparatus. By way of another example, the carbon rich material may be AISI 52100 Alloy Steel (UNS G52986). This is a high (hypereutectoid) carbon, chromium containing low alloy steel. If this material is applied in compacted powder-route form, the carbon level may be raised marginally above the industry specification to compensate for diffusion losses and to enhance the volume fraction of carbides at the bearing surface. The controller 12 may be configured to control the operation of the coating apparatus 27 to coat the inner surfaces 52, 64.

The sintering apparatus 28 may comprise any suitable apparatus for heating and coalescing the double helical gear 46. For example, the sintering apparatus 28 may comprise a pressureless sintering machine that may use any of the following processes: constant rate of heating (CRH); rate controlled sintering (RCS); and two step sintering (TSS). The controller 12 may be configured to control the operation of the sintering apparatus 28 to sinter the double helical gear 46. The sintering apparatus 28 may comprise a field assisted sintering machine.

The hot isostatic pressing apparatus 30 comprises a high pressure containment vessel, a heat source for heating an object within the vessel, and a pump arrangement for causing the pressure inside the vessel to increase. The controller 12 is configured to control the operation of the hot isostatic pressing apparatus 30. For example, the controller 12 may be configured to control the heat source to provide thermal energy to an object within the vessel, and may be configured to control the pump arrangement to pump an inert gas (such as argon) into the vessel.

The machining apparatus 32 comprises one or more machine tools. For example, the machining apparatus 32 may comprise an electropolishing machine and/or an electrical discharge machining (EDM) tool. The controller 12 may be configured to control the operation of the machining apparatus 32.

The robotic apparatus 33 may comprise any suitable robotic devices for moving an object (such as a manufactured double helical gear, and the mould 23) between the cold isostatic pressing apparatus 22, the coating apparatus 27, the sintering apparatus 28, hot isostatic pressing apparatus 30, and the machining apparatus 32. For example, the robotic apparatus 33 may comprise conveyor belts and robotic arms for re-positioning and re-orienting objects. The controller 12 is configured to control the operation of the robotic apparatus 33.

The operation of the apparatus 10 is described in the following paragraphs with reference to Fig. 4. It should be appreciated that the blocks illustrated in Fig. 4 may be performed by the controller 12 (for example by controlling the robotic apparatus 33), or may be performed by a human (such as the operator 44), or may be performed by a combination of the controller 12 and a human.

At block 72, the method includes controlling provision of the first mould part 24. For example, the controller 12 may control the robotic apparatus 33 to obtain the first mould part 24 from storage. Alternatively, the first mould part 24 may be obtained from storage by a human such as the operator 44.

At block 74, the method includes controlling provision of the second mould part 26. For example, the controller 12 may control the robotic apparatus 33 to obtain the second mould part 26 from storage. Alternatively, the second mould part 26 may be obtained from storage by a human such as the operator 44.

At block 76, the method may include controlling coating of the inner surface 52 of the first mould part 24 and the inner surface 64 of the second mould part 26 with carbon rich material. For example, the controller 12 may control the coating apparatus 27 to coat the inner surfaces 52, 64 with carbon rich material.

At block 78, the method includes controlling coupling of the first mould part 24 and the second mould part 26. For example, the first mould part 24 and/or the second mould part 26 may be moved together (as indicated by arrows 80 and 82 illustrated in Figs. 3A and 3B) so that the flanges 50 and 62 abut one another. The flanges 50, 62 may then be fastened together (for example, the flanges 50, 62 may be clamped together or may be bolted together). When the first and second mould parts 24, 26 are coupled together, the first cavity 56 and the second cavity 68 form a third cavity 25, and the plurality of first grooves 58 and the plurality of second grooves 70 form a double helical pattern.

It should be appreciated that the wording 'double helical' includes patterns where the first and second grooves 58, 70 do not meet (that is, there is a gap between the first and second grooves 58, 70), and patterns where the first and second grooves 58, 70 meet one another (that is, the first and second grooves 58, 70 form a herringbone pattern).

At block 84, the method may include controlling evacuation of the third cavity prior to providing powder to the third cavity. For example, the controller 12 may control a vacuum pump to evacuate the third cavity of the mould 23.

At block 86, the method includes controlling provision of the powder 20 to the third cavity 25 of the mould 23. For example, the controller 12 may control the robotic apparatus 33 to move at least some of the powder 20 from the container 18 to the third cavity of the mould 23. Alternatively, a human such as the operator 44 may pour the powder 20 into the third cavity 25 of the mould 23.

At block 88, the method includes controlling cold isostatic pressing of the powder within the third cavity to form a double helical gear. For example, the mould 23 may be moved to the cold isostatic pressing apparatus 22 and placed within the resilient bag. The controller 12 may then control the pump of the cold isostatic pressing apparatus 22 to pump liquid into the resilient bag to a predetermined pressure for predetermined period of time to form the double helical hear 46. For example, the controller 12 may control the cold isostatic pressing apparatus 22 to provide a pressure between two hundred and one thousand Mega Pascal for two minutes.

At block 90, the method may include controlling rotation of the first mould part 24 in a first direction (arrow 92 in Fig. 2A) and controlling rotation of the second mould part 26 in the first direction (arrow 94 in Fig. 3A) to remove the first mould part 24 and the second mould part 26 from the double helical gear 46. For example, the controller 12 may control the robotic apparatus 33 to rotate the first and second mould parts 24, 26 in the direction of the arrows 92, 94. It should be appreciated that the method may also include controlling movement of the first mould part 24 in the direction opposite to arrow 80, and controlling movement of the second mould part 26 in the direction opposite to arrow 82, to remove the double helical gear 46 from the mould 23.

At block 96, the method may include controlling sintering of the double helical gear. For example, the controller 12 may control the robot apparatus 33 to move the double helical gear 46 to the sintering apparatus 28. The controller 12 may then control the sintering apparatus 28 to heat the double helical gear 46 so that the powder of the double helical gear 46 coalesces.

At block 98, the method may include controlling hot isostatic pressing of the double helical gear 46. For example, the controller 12 may control the robot apparatus 33 to move the double helical gear 46 either from the cold isostatic pressing apparatus 22, or from the sintering apparatus 28, to the hot isostatic pressing apparatus 30. The controller 12 may then control the hot isostatic pressing apparatus 30 to hot isostatically press the double helical gear 46.

At block 100, the method may include controlling machining of the double helical gear 46. For example, the controller 12 may control the robot apparatus 33 to move the double helical gear 46 either from the sintering apparatus 28, or from the hot isostatic pressing apparatus 30, to the machining apparatus 32. The controller 12 may then control the machining apparatus 32 to machine a part, or all, of the double helical gear 46 to control the final geometry of the double helical gear 46.

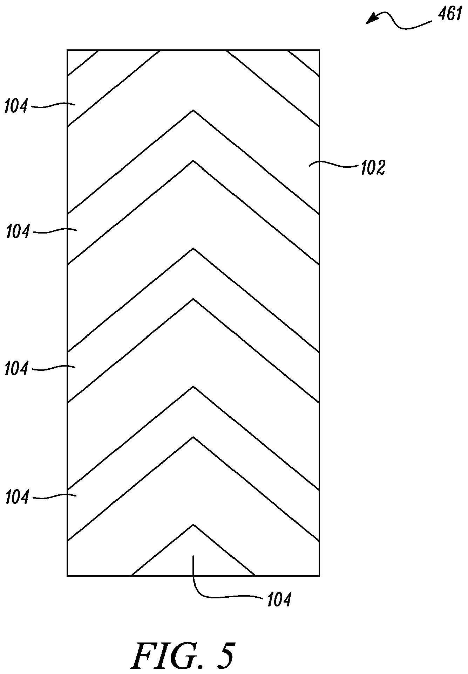

Fig. 5 illustrates a side view of a double helical gear 461 manufactured in accordance with the methods described in the preceding paragraphs and as illustrated in Fig. 4. The double helical gear 461 includes a hub 102 and a plurality of teeth 104 that extend radially outwards from the hub 102. The double helical gear 461 is manufactured using a mould 23 in which the first and second grooves 58, 70 extend along the whole length of the first and second mould parts 24, 26 respectively and consequently, the teeth 104 are arranged in a herringbone pattern (that is, the teeth 104 do not have a central groove).

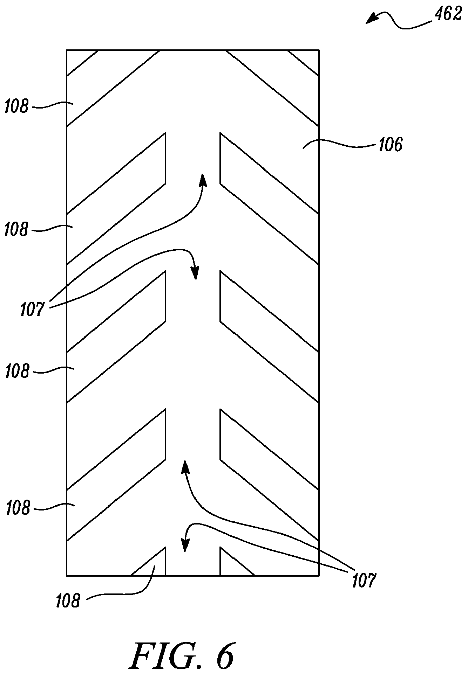

Fig. 6 illustrates a side view of another double helical gear 462 manufactured in accordance with the methods described in the preceding paragraphs and as illustrated in Fig. 4. The double helical gear 462 includes a hub 106 and a plurality of teeth 108 that extend radially outwards from the hub 106. The double helical gear 462 is manufactured using a mould 23 in which the first and second grooves 58, 70 do not extend to the entrance of the first and second cavities 56, 68 respectively and consequently, the teeth 108 have a central groove 107 that extends circumferentially around the gear 462.

The apparatus 10 and the methods described above may provide several advantages.

First, the methods and apparatus 10 may enable the manufacture of a double helical gear as illustrated in Fig. 5 (that is, a double helical gear where the teeth do not have a groove). Such a double helical gear may advantageously have a reduced weight without sacrificing load transferring capability. Furthermore, where the double helical gear is a component of a gearbox, the reduced weight of the double helical gear may enable a reduction in weight in other components of the gearbox (such as the gear carrying pins, bearings and the gearbox housing).

Second, the methods and apparatus 10 may enable the double helical gear 46, 461, 462 to be manufactured close to (or at) net shape and may provide a double helical gear 46, 461, 462 that requires minimal machining, or no machining at all (that is, block 100 may not be performed in some examples). This may advantageously reduce the quantity of material used to manufacture the double helical gear 46, 461, 462 and thus the cost of the double helical gear 46, 461, 462.

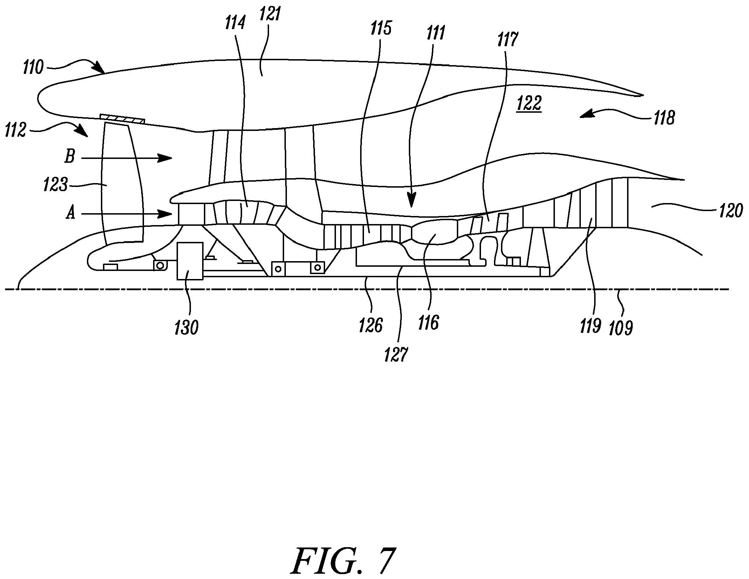

Figure 7 illustrates a gas turbine engine 110 having a principal rotational axis 109. The engine 110 comprises an air intake 112 and a propulsive fan 123 that generates two airflows: a core airflow A and a bypass airflow B. The gas turbine engine 110 comprises a core 111 that receives the core airflow A. The engine core 111 comprises, in axial flow series, a low pressure compressor 114, a high-pressure compressor 115, combustion equipment 116, a high-pressure turbine 117, a low pressure turbine 119 and a core exhaust nozzle 120. A nacelle 121 surrounds the gas turbine engine 110 and defines a bypass duct 122 and a bypass exhaust nozzle 118. The bypass airflow B flows through the bypass duct 122. The fan 123 is attached to and driven by the low pressure turbine 119 via a shaft 126 and an epicyclic gearbox 130.

In use, the core airflow A is accelerated and compressed by the low pressure compressor 114 and directed into the high pressure compressor 115 where further compression takes place. The compressed air exhausted from the high pressure compressor 115 is directed into the combustion equipment 116 where it is mixed with fuel and the mixture is combusted. The resultant hot combustion products then expand through, and thereby drive, the high pressure and low pressure turbines 117, 119 before being exhausted through the nozzle 120 to provide some propulsive thrust. The high pressure turbine 117 drives the high pressure compressor 115 by a suitable interconnecting shaft 127. The fan 123 generally provides the majority of the propulsive thrust. The epicyclic gearbox 130 is a reduction gearbox.

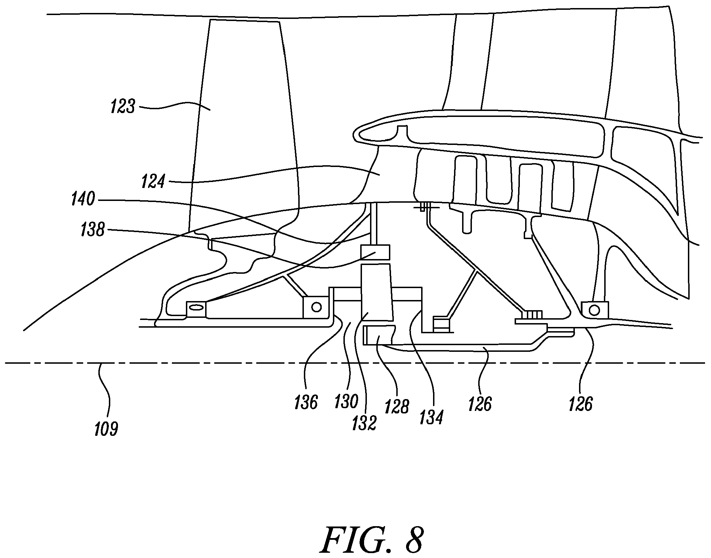

An exemplary arrangement for a geared fan gas turbine engine 110 is shown in Figure 8. The low pressure turbine 119 (see Figure 1) drives the shaft 126, which is coupled to a sun wheel, or sun gear, 128 of the epicyclic gear arrangement 130. Radially outwardly of the sun gear 128 and intermeshing therewith is a plurality of planet gears 132 that are coupled together by a planet carrier 134. The planet carrier 134 constrains the planet gears 132 to precess around the sun gear 128 in synchronicity whilst enabling each planet gear 132 to rotate about its own axis. The planet carrier 134 is coupled via linkages 136 to the fan 123 in order to drive its rotation about the engine axis 109. Radially outwardly of the planet gears 132 and intermeshing therewith is an annulus or ring gear 138 that is coupled, via linkages 140, to a stationary supporting structure 124.

Note that the terms "low pressure turbine" and "low pressure compressor" as used herein may be taken to mean the lowest pressure turbine stages and lowest pressure compressor stages (i.e. not including the fan 123) respectively and/or the turbine and compressor stages that are connected together by the interconnecting shaft 126 with the lowest rotational speed in the engine (i.e. not including the gearbox output shaft that drives the fan 123). In some literature, the "low pressure turbine" and "low pressure compressor" referred to herein may alternatively be known as the "intermediate pressure turbine" and "intermediate pressure compressor". Where such alternative nomenclature is used, the fan 123 may be referred to as a first, or lowest pressure, compression stage.

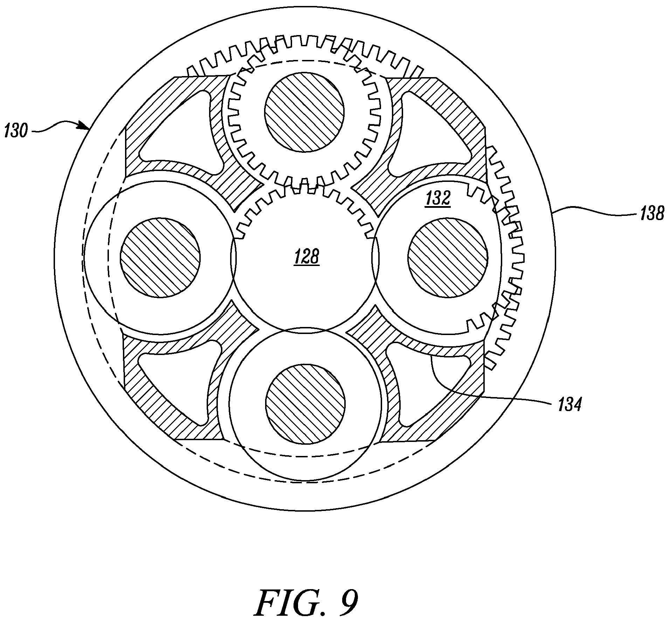

The epicyclic gearbox 130 is shown by way of example in greater detail in Figure 9. Each of the sun gear 128, planet gears 132 and ring gear 138 comprise teeth about their periphery to intermesh with the other gears. However, for clarity only exemplary portions of the teeth are illustrated in Figure 9. There are four planet gears 132 illustrated, although it will be apparent to the skilled reader that more or fewer planet gears 132 may be provided within the scope of the claimed invention. Practical applications of a planetary epicyclic gearbox 130 generally comprise at least three planet gears 132.

The epicyclic gearbox 130 illustrated by way of example in Figures 8 and 9 is of the planetary type, in that the planet carrier 134 is coupled to an output shaft via linkages 136, with the ring gear 138 fixed. However, any other suitable type of epicyclic gearbox 130 may be used. By way of further example, the epicyclic gearbox 130 may be a star arrangement, in which the planet carrier 134 is held fixed, with the ring (or annulus) gear 138 allowed to rotate. In such an arrangement the fan 123 is driven by the ring gear 138. By way of further alternative example, the gearbox 130 may be a differential gearbox in which the ring gear 138 and the planet carrier 134 are both allowed to rotate.

It will be appreciated that the arrangement shown in Figures 8 and 9 is by way of example only, and various alternatives are within the scope of the present disclosure. Purely by way of example, any suitable arrangement may be used for locating the gearbox 130 in the engine 110 and/or for connecting the gearbox 130 to the engine 110. By way of further example, the connections (such as the linkages 136, 140 in the Figure 8 example) between the gearbox 130 and other parts of the engine 110 (such as the input shaft 126, the output shaft and the fixed structure 124) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 8. For example, where the gearbox 130 has a star arrangement (described above), the skilled person would readily understand that the arrangement of output and support linkages and bearing locations would typically be different to that shown by way of example in Figure 8.

Accordingly, the present disclosure extends to a gas turbine engine having any arrangement of gearbox styles (for example star or planetary), support structures, input and output shaft arrangement, and bearing locations.

One or more of the sun gear 128, the planet gears 132, and the ring gear 138 are manufactured in accordance with the methods described above and may have the herringbone gear teeth pattern illustrated in Fig. 5, or the gear teeth pattern illustrated in Fig. 6.

Optionally, the gearbox may drive additional and/or alternative components (e.g. the intermediate pressure compressor and/or a booster compressor).

Other gas turbine engines to which the present disclosure may be applied may have alternative configurations. For example, such gas turbine engines may have an alternative number of compressors and/or turbines and/or an alternative number of interconnecting shafts. By way of further example, the gas turbine engine shown in Figure 7 has a split flow nozzle 120, 122 meaning that the flow through the bypass duct 122 has its own nozzle that is separate to and radially outside the core engine nozzle 120. However, this is not limiting, and any aspect of the present disclosure may also apply to engines in which the flow through the bypass duct 122 and the flow through the core 111 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example.

The geometry of the gas turbine engine 110, and components thereof, is defined by a conventional axis system, comprising an axial direction (which is aligned with the rotational axis 109), a radial direction (in the bottom-to-top direction in Figure 7), and a circumferential direction (perpendicular to the page in the Figure 7 view). The axial, radial and circumferential directions are mutually perpendicular.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A method of manufacture comprising:
controlling provision of a first mould part including an inner surface defining a first cavity, the inner surface of the first mould part comprising a plurality of first grooves;
controlling provision of a second mould part including an inner surface defining a second cavity, the inner surface of the second mould part comprising a plurality of second grooves;
controlling coupling of the first mould part and the second mould part, the first cavity and the second cavity forming a third cavity, the plurality of first grooves and the plurality of second grooves forming a double helical pattern;
controlling provision of a powder to the third cavity; and
controlling cold isostatic pressing of the powder within the third cavity to form a double helical gear.

2. A method as claimed in claim 1, further comprising controlling rotation of the first mould part in a first direction and controlling rotation of the second mould part in the first direction, to remove the first mould part and the second mould part from the double helical gear.

3. A method as claimed in claim 1 or 2, further comprising controlling sintering of the double helical gear.

4. A method as claimed in any of the preceding claims, further comprising controlling hot isostatic pressing of the double helical gear.

5. A method as claimed in any of the preceding claims, further comprising controlling machining of the double helical gear.

6. A method as claimed in any of the preceding claims, further comprising controlling coating of the inner surface of the first mould part and the inner surface of the second mould part with carbon rich material, prior to providing powder to the third cavity.

7. A method as claimed in any of the preceding claims, further comprising controlling evacuation of the third cavity prior to providing powder to the third cavity.

8. Apparatus comprising a controller configured to:
control provision of a first mould part including an inner surface defining a first cavity, the inner surface of the first mould part comprising a plurality of first grooves;
control provision of a second mould part including an inner surface defining a second cavity, the inner surface of the second mould part comprising a plurality of second grooves;
control coupling of the first mould part and the second mould part, the first cavity and the second cavity forming a third cavity, the plurality of first grooves and the plurality of second grooves forming a double helical pattern;
control provision of a powder to the third cavity; and
control cold isostatic pressing of the powder within the third cavity to form a double helical gear.

9. Apparatus as claimed in claim 8, wherein the controller is configured to control rotation of the first mould part in a first direction and control rotation of the second mould part in the first direction, to remove the first mould part and the second mould part from the double helical gear.

10. Apparatus as claimed in claim 8 or 9, wherein the controller is configured to control sintering of the double helical gear.

11. Apparatus as claimed in any of claims 8 to 10, wherein the controller is configured to control hot isostatic pressing of the double helical gear.

12. Apparatus as claimed in any of claims 8 to 11, wherein the controller is configured to control machining of the double helical gear.

13. Apparatus as claimed in any of claims 8 to 12, wherein the controller is configured to control coating of the inner surface of the first mould part and the inner surface of the second mould part with carbon rich material, prior to providing powder to the third cavity.

14. Apparatus as claimed in any of claims 8 to 13, wherein the controller is configured to control evacuation of the third cavity prior to providing powder to the third cavity.

15. A computer program that, when read by a computer, causes performance of the method as claimed in any of claims 1 to 7.
